# EUROPEAN PATENT APPLICATION

(11) **EP 4 144 771 A1**
(43) Date of publication of application: **08.03.2023**
(21) Application number: 22192025.9
(22) Date of filing: 24.08.2022
(51) Int. Cl.: C08F 120/18, C08F 122/10, C08F 220/18, C08F 222/10, C09D 4/00, C09D 5/00

(54) **PHOTOCURABLE COATING AGENT**

(30) Priority: 07.09.2021 JP 2021145419
(71) Applicant: ThreeBond Co., Ltd., Tokyo 192-0398 (JP)
(72) Inventor: KANEKO, Satoshi, Tokyo, 192-0398 (JP)
(74) Representative: Petty, Catrin Helen

(57) **Abstract**

The present invention enables a photocurable coating agent in which electrical insulation is high, and viscosity is low even not using a solvent, in an insulating coating for coils and the like.

A photocurable coating agent includes component (A) and component (B), and includes component (A-1) in an amount of 50 to 100% by mass with respect to a total of component (A-1) and component (A-2):
Component (A): a (meth)acrylate consisting of following component (A-1) or following component (A-1) and following component (A-2);
Component (A-1): a (meth)acrylate having a cyclic structure;
Component (A-2): a (meth)acrylate having a chain structure and having three or more (meth)acryloyl groups in the molecule; and
Component (B): a photoinitiator.

## Description

### CROSS-REFERENCE TO RELATED APPLICATION

### BACKGROUND

### 1. Technical Field

The present invention relates to an insulating photocurable coating agent.

### 2. Description of Related Arts

For an insulating coating portion of a coil such as a motor, there are known a solvent volatilization type varnish in which a polymer or a resin is dissolved in a solvent or a coating agent in which a solvent is added to a thermosetting resin as in JP 2014-007238 A. These can easily reduce the viscosity of a resin component having high insulating properties by a solvent; however, although the solvent is volatilized by heating or the like, the solvent remains in a cured product, whereby the electrical insulation may be lowered or defects of a coating film may remain.

### SUMMARY

Conventionally, in an insulating coating for coils and the like, it is difficult to produce a photocurable coating agent in which electrical insulation (resistance value) is high and viscosity is low without using a solvent.

An object of the present invention is to provide a photocurable coating agent in which electrical insulation is high, and viscosity is low even not using a solvent, in insulating coatings for coils and the like.

As a result of intensive studies to achieve the above object, the inventors of the present invention have found a method related to a photocurable coating agent in which electrical insulation is high and a solvent is not included, and have completed the present invention.

The gist of the present invention will be described below. A first embodiment of the present invention is a photocurable coating agent including component (A) and component (B), and including component (A-1) in an amount of 50 to 100% by mass with respect to the total of component (A-1) and component (A-2).
Component (A): (meth)acrylate consisting of the following component (A-1) or the following component (A-1) and the following component (A-2)
Component (A-1): (meth)acrylate having a cyclic structure
Component (A-2): (meth)acrylate having a chain structure and having three or more (meth)acryloyl groups in the molecule
Component (B): photoinitiator.

A second embodiment of the present invention is the photocurable coating agent of the first embodiment, in which the component (A-1) is a (meth)acrylate having an alicyclic structure and/or a (meth)acrylate having an isocyanurate structure.

A third embodiment of the present invention is the photocurable coating agent of the first or second embodiment, wherein the photocurable coating agent does not include a (meth)acrylate other than component (A-1) and component (A-2).

A fourth embodiment of the present invention is the photocurable coating agent of any one of the first to third embodiments, further including an organic peroxide as component (C).

A fifth embodiment of the present invention is the photocurable coating agent of any one of the first to fourth embodiments, further including an anaerobic curing catalyst as component (D).

A sixth embodiment of the present invention is the photocurable coating agent of any one of the first to fifth embodiments, in which the viscosity at 25°C is 20 to 3000 mPa·s.

A seventh embodiment of the present invention is the photocurable coating agent of any one of the first to sixth embodiments, not including a filler.

An eighth embodiment of the present invention is the photocurable coating agent of any one of the first to seventh embodiments, wherein the photocurable coating agent does not include a solvent.

A ninth embodiment of the present invention is the photocurable coating agent of any one of the first to eighth embodiments, in which an AC resistance value of a cured product at 2 MHz is 1 MΩ or more.

The present invention enables a photocurable coating agent in which electrical insulation is high, and viscosity is low even not using a solvent, in an insulating coating for coils and the like.

When "to" is used to describe a numerical range in the description, it indicates a range including an upper limit and a lower limit.

### DETAILED DESCRIPTION

Details of the present invention will be described below. Component (A) that can be used in the present invention includes (or consists of) a (meth)acrylate having a cyclic structure as component (A-1), or a (meth)acrylate having a cyclic structure as the component (A-1) and a (meth)acrylate having a chain structure as component (A-2) and having three or more (meth)acryloyl groups in the molecule, and includes component (A-1) in an amount of 50 to 100% by mass with respect to all components (A) (total mass). When component (A) consists of component (A-1), component (A) includes component (A-1) in an amount of 100% by mass with respect to all components (A) (total mass). When component (A) consists of component (A-1) and component (A-2), component (A-1) is included in an amount of 50% by mass or more and less than 100% by mass, and component (A-2) is included in an amount of more than 0% by mass and 50% by mass or less, preferably component (A-1) is included in an amount of 50 to 90% by mass and component (A-2) is included in an amount of 10 to 50% by mass, with respect to the total mass of component (A-1) and component (A-2) (all components (A)). Herein, component (A-1) is excluded from component (A-2). From the viewpoint of workability, the viscosity (25°C) of each component of component (A) is preferably 50000 mPa·s or less, and more preferably 1 to 40000 mPa·s (hereinafter, when any of an acryloyl group and a methacryloyl group is referred to, it is referred to as a (meth)acryloyl group, and a compound having a (meth)acryloyl group is also referred to as a (meth)acrylate).

It suffices if component (A-1) includes one or more (meth)acryloyl groups in the molecule and has a cyclic structure, and examples of the cyclic structure include an isocyanurate (isocyanuric acid) structure, an alicyclic structure composed (consisting) of a hydrocarbon including an unsaturated bond, and an alicyclic structure composed of a hydrocarbon composed of only a saturated bond. However, as the cyclic structure related to component (A-1), an aromatic cyclic structure is excluded. In order to maintain low viscosity and high electrical insulation, a (meth)acrylate having only one cyclic structure and two or three (meth)acryloyl groups in the molecule is most preferable as component (A-1). When two or more cyclic structures are present in the molecule, the viscosity increases. In order to achieve both low viscosity and electrical insulation, component (A-1) is preferably a (meth)acrylate having an alicyclic structure and/or a (meth)acrylate having an isocyanurate structure. Specific examples of component (A-1) include, but are not limited to, isocyanuric acid EO-modified di- and tri(meth)acrylates, dimethyloltricyclodecane di(meth)acrylates, dicyclopentanyl(meth)acrylates, dicyclopentenyl(meth)acrylates, and dicyclopentenyloxyethyl(meth)acrylates. Examples of product names include, but are not limited to, M-313 and the like as Aronix series manufactured by Toagosei Co., Ltd.; A-DCP, DCP, and the like as NK Ester series manufactured by Shin-Nakamura Chemical Co., Ltd.; and FA-513AS and the like as Fancryl series manufactured by Showa Denko Materials Co., Ltd. Component (A-1) may be a single component or a mixture of two or more. When component (A) consists of component (A-1), component (A-1) is preferably a single component or a mixture of two.

The chain structure in component (A-2) is a structure showing a linear or branched main chain not including a cyclic structure, and examples thereof include a hydrocarbon chain, a chain having an ether group, a chain having an ester group, and the like, and has three or more (meth)acryloyl groups. Specific examples of component (A-2) include, but are not limited to, trimethylolpropane tri(meth)acrylate, pentaerythritol tri(meth)acrylate, and alkoxylated pentaerythritol tri(meth)acrylate. Examples of product names include, but are not limited to, TMPT as NK Ester series manufactured by Shin-Nakamura Chemical Co., Ltd. Component (A-2) may be a single component or a mixture of two or more.

The photocurable coating agent of the present invention may include a (meth)acrylate other than component (A-1) and component (A-2). The amount of (meth)acrylate other than component (A-1) and component (A-2) to be added is, for example, more than 0 parts by mass and 0.5 parts by mass or less, and preferably more than 0 parts by mass and 0.3 parts by mass or less, with respect to 100 parts by mass of component (A). In one embodiment, the photocurable coating agent of the present invention preferably does not include any (meth)acrylate other than component (A-1) and component (A-2) in order to achieve both low viscosity and electrical insulation.

Component (B) that can be used in the present invention is a photoinitiator. By imparting photocurability, it is possible to cure the coating agent before the coating agent drips from the adherend, and furthermore, it is also possible to cure the coating agent before a thickness of coating film before curing deviates. The photoinitiator is a compound that is decomposed by irradiation with active energy rays such as ultraviolet rays and visible light to generate radical species.

Examples of component (B) include an acetophenone-based photoinitiator, a benzoin-based photoinitiator, a benzophenone-based photoinitiator, a thioxanthone-based photoinitiator, and an acylphosphine oxide-based photoinitiator. These may be used singly, or may be used in combination of two or more. Component (B) is preferably an acetophenone-based photoinitiator or an acylphosphine oxide-based photoinitiator. The acylphosphine oxide photoinitiator, which is easily cured by energy rays in the visible light region, is added to a composition, the composition itself tends to be yellow; however, it is more preferable to include the acylphosphine oxide photoinitiator because the photocurability is improved.

Examples of the acetophenone-based photoinitiator include, but are not limited to, diethoxyacetophenone, 2-hydroxy-2-methyl-1-phenylpropan-1-one, benzyl dimethyl ketal, 4-(2-hydroxyethoxy)phenyl-(2-hydroxy-2-propyl)ketone, 1-hydroxycyclohexylphenylketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomer. The acetophenone-based photoinitiator is preferably 2-hydroxy-2-methyl-1-phenylpropan-1-one or 1-hydroxycyclohexylphenylketone.

Examples of the benzoin-based photoinitiator include, but are not limited to, benzoin, benzoin methyl ether, benzoin ethyl ether, benzoin isopropyl ether, and benzoin isobutyl ether.

Examples of the benzophenone-based photoinitiator include, but are not limited to, benzophenone, methyl o-benzoyl benzoate, 4-phenylbenzophenone, 4-benzoyl-4'-methyl-diphenylsulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanaminium bromide, and (4-benzoylbenzyl)trimethylammonium chloride.

Examples of the thioxanthone-based photoinitiator include, but are not limited to, 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthone-9-one mesochloride.

Examples of the acylphosphine oxide-based photoinitiator include, but are not limited to, bis(2,4,6-trimethylbenzoyl)-phenylphosphine oxide, 2,4,6-trimethylbenzoyl-diphenylphosphine oxide, and 2,4,6-trimethylbenzoylphenylethoxyphosphine oxide. The acylphosphine oxide-based photoinitiator is preferably 2,4,6-trimethylbenzoyl-diphenylphosphine oxide.

The amount of component (B) to be added is preferably 0.1 to 10 parts by mass with respect to 100 parts by mass of component (A). In the case of 0.1 parts by mass or more, photocurability is exhibited, and when the amount is 10 parts by mass or less, the possibility of the cured product to become colored is lowered.

Component (C) that can be used in the present invention is an organic peroxide, and is a compound such as general formula 1. Herein, R¹ is an organic group, and R² is an organic group or hydrogen. When using in combination with component (B) , a shadow portion that cannot be irradiated with light can be provided with thermosetting property to be cured by heating. Specific examples of component (C) include, but are not limited to, p-menthane hydroperoxide, diisopropylbenzene hydroperoxide, 1,1,3,3-tetramethylbutylhydroperoxide, cumene hydroperoxide, t-butylhydroperoxide, and t-butylperoxy-2-ethylhexanoate.
[Chemical Formula 1]

R¹-O-O-R² ... General formula 1

Component (C) is added in an amount of preferably 0.01 to 5.0 parts by mass, more preferably 0.1 to 3.0 parts by mass with respect to 100 parts by mass of component (A). When the amount of the organic peroxide to be added is 0.01 parts by mass or more, thermosetting property is exhibited or anaerobic curing is exhibited by using in combination with component (D) described later, and when the amount of the organic peroxide to be added is 5.0 parts by mass or less, storage stability can be maintained.

Component (D) that can be used in the present invention is an anaerobic curing catalyst. When using in combination with component (C), anaerobic curing property can be provided in a gap where light irradiation cannot be performed, and when the adherend is a metal, curing can be performed at room temperature. Specific examples of component (D) include saccharin represented by Formula 2.

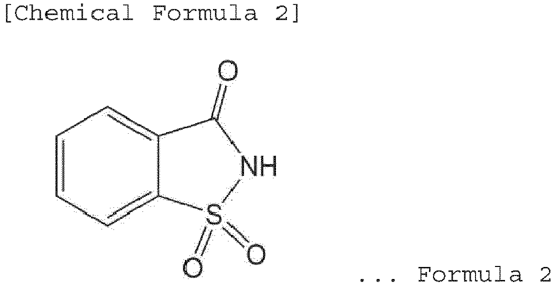

In addition to component (D), as a polymerization accelerator for component (D), there can be added: tertiary amines such as N,N-dimethylaniline, N,N-dimethyl-P-toluidine, diisopropanol-P-toluidine, and triethylamine; polyamines such as diethylenetriamine, triethylenetetramine, and pentaethylenehexamine; thioureas such as thiourea, ethylenethiourea, benzoylthiourea, acetylthiourea, and tetramethylthiourea; monofunctional thiols; and hydrazine compounds such as 1-acetyl-2-phenylhydrazine.

It is preferable to add 0.01 to 10 parts by mass of component (D) with respect to 100 parts by mass of component (A). In the case of 0.01 parts by mass or more, anaerobic curing property is exhibited, and in the case of 10 parts by mass or less, storage stability can be maintained.

It is preferable to add 0.01 to 0.5 parts by mass of the polymerization accelerator with respect to 1 part by mass of component (D). In the case of 0.01 parts by mass or more, anaerobic curing property is promoted, and in the case of 0.5 parts by mass or less, storage stability can be maintained.

In one embodiment, the photocurable coating agent of the present invention does not include component (D) or a polymerization accelerator.

The photocurable coating agent of the present invention may be blended with other components, as long as the object of the present invention is not impaired, such as coupling agents, fillers including inorganic fillers and organic fillers, and additives including polymerization inhibitors, chelating agents, antioxidants, light stabilizers, UV absorbers, plasticizers, dyes, pigments, flame retardants, sensitizers, heavy metal deactivators, ion trapping agents, emulsifiers, water dispersion stabilizers, defoamers, mold release agents, leveling agents, waxes, rheology control agents, and surfactants.

However, it is preferable that the photocurable coating agent of the present invention does not include any solvent because the coating film thickness of the solvent is reduced after drying and the resistance value cannot be maintained high. Example of the solvent include: alcohol solvents such as methanol, ethanol, isopropyl alcohol, and methoxypropanol (alcohol solvents also include alcohol solvents containing ether groups); chlorine-based solvents such as dichloroethane and trichloroethane; fluorine-based solvents such as trichlorofluoroethane; ketone-based solvents such as acetone, methyl ethyl ketone, and methyl isobutyl ketone; ester-based solvents such as methyl acetate, ethyl acetate, propyl acetate, and butyl acetate; etherbased solvents such as dimethyl ether and methyl ethyl ether; hydrocarbon-based solvents such as pentane, hexane, heptane, and cyclohexane; and aromatic solvents such as benzene, toluene, and xylene.

In addition, it is preferable that the photocurable coating agent of the present invention does not include rubber, an elastomer, or a thermoplastic resin (a material used by being dissolved (compatible) with acryl or epoxy) as a film forming agent because the viscosity increases and workability is hindered such as thread pulling. Herein, the rubber is not particularly limited, and examples thereof include isoprene rubber as natural rubber, and synthetic rubbers such as butadiene rubber, styrene-butadiene rubber, chloroprene rubber, nitrile rubber, polyisobutylene (butyl rubber), ethylene propylene rubber, chlorosulfonated polyethylene, acrylic rubber, fluororubber, epichlorohydrin rubber, urethane rubber, and silicone rubber. The elastomer is not particularly limited, and examples thereof include (thermoplastic) elastomers such as styrene-based, olefin/alkene-based, vinyl chloride-based, urethanebased, and amide-based elastomers. The thermoplastic resin is not particularly limited, and examples thereof include polyalkylenes such as polyethylene, high density polyethylene, medium density polyethylene, low density polyethylene, and polypropylene; polyvinyl chloride, polyvinylidene chloride, polystyrene, polyvinyl acetate, polyurethane, polytetrafluoroethylene, ABS resin (acrylonitrile butadiene styrene resin), AS resin, acrylic resin, polyamide, polyacetal, polycarbonate, and modified polyphenylene ether; polyesters such as polyethylene terephthalate, glass fiber reinforced polyethylene terephthalate, and polybutylene terephthalate; cyclic polyolefin, polyphenylensulfide, polytetrafluoroethylene, polysulfone, polyether sulfone, amorphous polyarylate, liquid crystal polymer, polyether ether ketone, thermoplastic polyimide, polyamideimide, and phenoxy resin (for example, bisphenol A/bisphenol F copolymer phenoxy resin).

The coupling agent that can be used in the present invention is particularly a silane coupling agent. Specific examples thereof include: 2-(3,4-epoxycyclohexyl)ethyltrimethoxysilane; glycidyl group-containing silane coupling agents such as 3-glycidoxypropyltriethoxysilane, 3-glycidoxypropylmethyldimethoxysilane, 3-glycidoxypropyltrimethoxysilane, and 3-glycidoxypropylmethyldiethoxysilane; vinyl group-containing silane coupling agents such as vinyltris(β-methoxyethoxy)silane, vinyltriethoxysilane, and vinyltrimethoxysilane; (meth)acryloyl group-containing silane coupling agents such as γ-methacryloxypropyltrimethoxysilane; amino group-containing silane coupling agents such as N-β-(aminoethyl)-γ-aminopropyltrimethoxysilane, γ-aminopropyltriethoxysilane, and N-phenyl-γ-aminopropyltrimethoxysilane; and others such as γ-mercaptopropyltrimethoxysilane and γ-chloropropyltrimethoxysilane. These may be used singly, or may be used in combination of two or more. Of these, a silane coupling agent containing an epoxy group or a (meth)acryloyl group is preferably used from the viewpoint that further improvement in adhesion can be expected.

The filler that can be used in the present invention is particularly an inorganic filler. Specific examples of the inorganic filler include glass powder, fumed silica powder, silica powder, alumina powder, mica powder, silicone rubber powder, calcium carbonate powder, aluminum nitride powder, carbon powder, kaolin clay powder, dry clay mineral powder, dry diatomaceous earth powder, and metal powder. Furthermore, examples of the fumed silica powder include those obtained by chemically modifying (hydrophobizing) the surface with organochlorosilanes, polyorganosiloxanes, hexamethyldisilazane, and the like, and examples thereof include commercially available products such as R974, R972, R972V, R972CF, R805, R812, R812S, R816, R8200, RY200, RX200, RY200S, and R202 as AEROSIL series manufactured by Nippon Aerosil Co., Ltd. However, considering that the viscosity increases, it is preferable that the photocurable coating agent of the present invention does not include any filler.

Examples of the polymerization inhibitor that can be used in the present invention include, but are not limited to: quinone-based polymerization inhibitors such as hydroquinone, methoxyhydroquinone, benzoquinone, and p-tert-butylcatechol; alkylphenol-based polymerization inhibitors such as 2,6-di-tert-butylphenol, 2,4-di-tert-butylphenol, 2-tert-butyl-4,6-dimethylphenol, 2,6-di-tert-butyl-4-methylphenol (BHT), and 2,4,6-tri-tert-butylphenol; amine-based polymerization inhibitors such as alkylated diphenylamine, N,N'-diphenyl-p-phenylenediamine, phenothiazine, 4-hydroxy-2,2,6,6-tetramethylpiperidine, 4-benzoyloxy-2,2,6,6-tetramethylpiperidine, 1,4-dihydroxy-2,2,6,6-tetramethylpiperidine, and 1-hydroxy-4-benzoyloxy-2,2,6,6-tetramethylpiperidine; and N-oxyl-based polymerization inhibitors such as 2,2,6,6-tetramethylpiperidin-N-oxyl, 4-hydroxy-2,2,6,6-tetramethylpiperidin-N-oxyl, and 4-benzoyloxy-2,2,6,6-tetramethylpiperidin-N-oxyl.

Specific examples of the chelating agent that can be used in the present invention include, but are not limited to, EDTA-2Na (2NA: ethylenediamine-N,N,N',N'disodium tetraacetate salt dihydrate) and EDTA-4Na (4NA: ethylenediamine-N,N,N',N'-tetraacetic acid tetrasodium salt tetrahydrate) manufactured by Dojindo Laboratories, and examples of the chelating agent that is liquid at 25°C include MZ-8 manufactured by Chelest Corporation.

It is preferable that the photocurable coating agent of the present invention preferably does not include any inorganic filler in order to lower the viscosity. This makes it possible to achieve a photocurable coating agent in which the viscosity (25°C) is 20 to 3000 mPa·s. In addition, when a solvent is used, bubbles are generated in the coating film, and therefore it is preferable that no solvent is included. As an application, the photocurable coating agent of the present invention can be used for an insulating coating part of a coil such as a motor, and by impregnation, spraying, or the like as a coating method and by light irradiation, curing occurs and a coating film is formed, and if there is a shadow portion, the entire coating film can be cured by providing thermosetting property or anaerobic curing property.

### Examples

Next, the present invention will be described in more detail with reference to Examples, and the present invention is not limited to only these Examples. Hereinafter, the photocurable coating agent of the present invention is also simply referred to as a composition. In addition, as a reference example, there was used NV-800, which is a mixture of an imide-modified polyester resin as a polyester resin and a styrene monomer as a polymerizable monomer, manufactured by Nitto Shinko Corporation.

### [Examples 1 to 12 and Comparative Examples 1 to 3]

In order to prepare photocurable coating agents of Examples 1 to 12 and Comparative Examples 1 to 3, the following components were prepared.
Component (A): (meth)acrylate of component (A-1) and component (A-2)
Component (A-1): (meth)acrylate having a cyclic structure
   - Isocyanuric acid EO-modified di- and tri-acrylate (viscosity (25°C): 28000 mPa·s) (ARONIX M-313, manufactured by Toagosei Co., Ltd.)
   - Dimethyloltricyclodecane diacrylate (viscosity (25°C): 135 mPa·s) (NK Ester A-DCP, manufactured by Shin-Nakamura Chemical Co., Ltd.)
   - Dimethyloltricyclodecane dimethacrylate (viscosity (25°C): 110 mPa·s) (NK Ester DCP, manufactured by Shin-Nakamura Chemical Co., Ltd.)
   - Dicyclopentanyl acrylate (viscosity (25°C): 12 mPa·s) (FA-513AS, manufactured by Showa Denko Materials Co., Ltd.)
Component (A-2): (meth)acrylate having a chain structure and having three or more (meth)acryloyl groups in the molecule
   - Trimethylolpropane trimethacrylate (viscosity (25°C): 45 mPa·s) (NK Ester TMPT, manufactured by Shin-Nakamura Chemical Co., Ltd.)
Component (A'): (Meth)acrylate other than component (A)
   - 2-Hydroxyethyl methacrylate acid phosphate (viscosity (25°C): 150 mPa·s) (JPA-514, manufactured by Johoku Chemical Co., Ltd.)
   - A mixture of modified epoxy acrylate/2-hydroxyethyl methacrylate = 6 : 4 (viscosity (25°C): 70 mPa·s) (EPOCLON UE-8071-60BH, manufactured by DIC Corporation)
Component (B): photoinitiator
   - 2-Hydroxy-2-methyl-1-phenyl-propan-1-one (DAROCUR1173, manufactured by Double Bond Chemical Ind., Co., Ltd.)
   - 1-Hydroxy-cyclohexyl-phenyl ketone (IRGACURE184, manufactured by BASF)
   - 2,4,6-Trimethylbenzoyl-diphenyl-phosphine oxide (manufactured by SPEEDCURE TPO Lambson Ltd.)
Component (C): organic peroxide
   - t-Butylperoxy-2-ethylhexanoate (Percure O, manufactured by NOF CORPORATION)
   - Cumene hydroperoxide (PERCUMYL H-80, manufactured by NOF CORPORATION)
Component (D): anaerobic curing catalyst
   - Saccharin (insoluble saccharin B-1P, manufactured by Daiwa Fine Chemicals Co., Ltd.)
Polymerization accelerator for component (D)
   - 1-Acetyl-2-phenylhydrazine (APH, manufactured by Sanuki Chemical Industry Co., Ltd.)
Polymerization inhibitor
   - 2,6-Di-t-butyl-4-methylphenol (BHT) (reagent) Chelating agent
   - Ethylenediamine-N,N,N',N'-tetraacetic acid disodium salt dihydrate (2NA (EDTA·2Na) manufactured by Dojindo Laboratories)
Film forming agent
   - Bisphenol A/bisphenol F copolymerized phenoxy resin (phenototo YP-70, Nippon Steel Chemical & Material Co., Ltd.).

Component (A-1), component (A-2) (or component (A')), and other components (film forming component, stabilizer, polymerization inhibitor) were weighed in a stirring vessel, and stirred for 1 hour under an atmosphere of 25°C. Thereafter, component (B), component (C), and component (D) (including the polymerization accelerator for component (D)) were weighed in the stirring vessel and further stirred for 30 minutes. Detailed preparation amounts are in accordance with Table 1, and all numerical values are expressed in parts by mass.

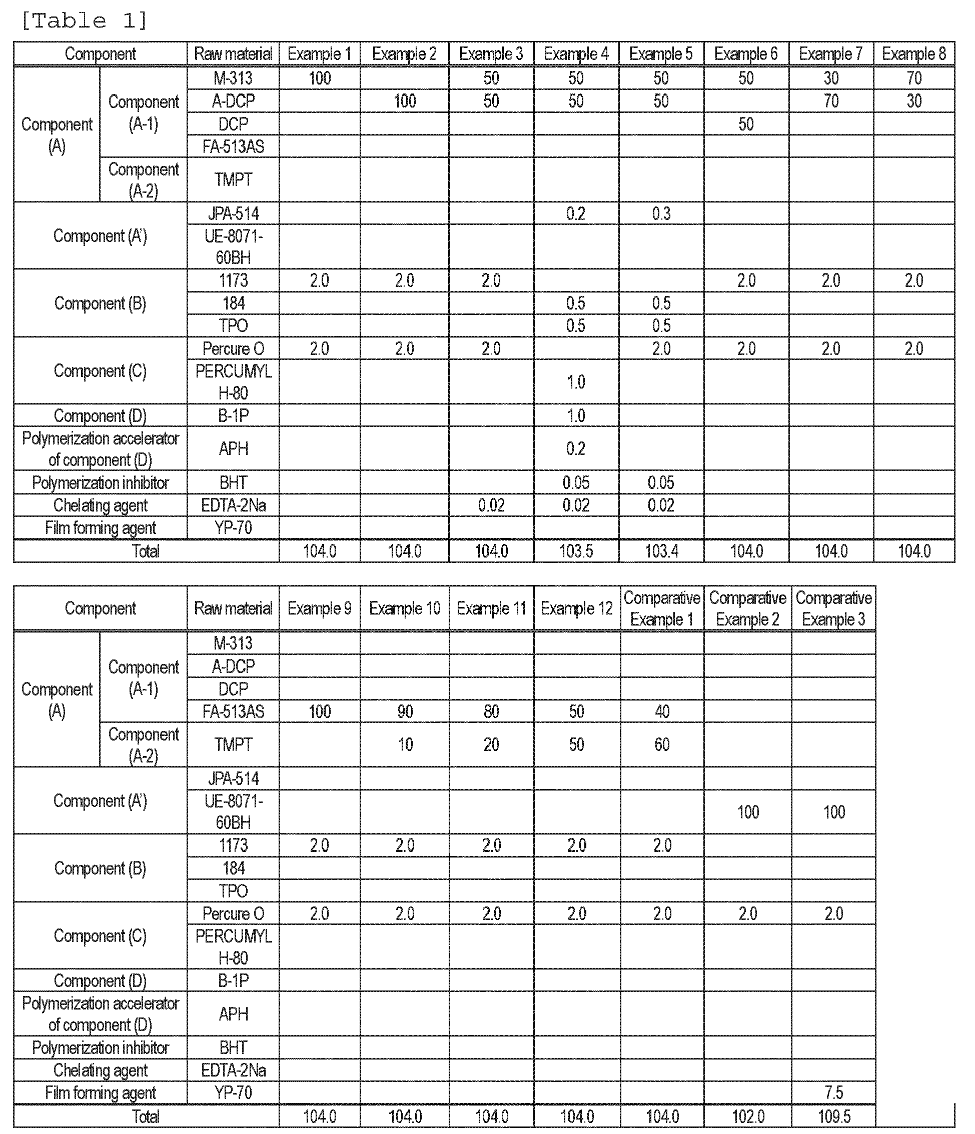

0.5 ml of each of the photocurable coating agents of Examples 1 to 12 and Comparative Examples 1 to 3 was collected and discharged into a measuring cup. Viscosity measurement was performed at a shear rate of 1/s under an environment of 25°C using an EHD type viscometer (manufactured by Toki Sangyo Co., Ltd.). As a result, all the viscosities were included in the range of 20 to 3000 mPa·s.

In order to confirm whether anaerobic curing property and thermosetting property were exhibited, a fitting test piece composed of a SPCC collar with an inner diameter of 6 mm and a length of 15 mm and an SPCC pin with a diameter of about 6 mm was used. The photocurable coating agent of Example 4 was applied to the inside of the collar, a pin was fitted, and the test piece was left to stand at 25°C for 1 hour. Thereafter, it was confirmed that anaerobic curing property was exhibited because the pin was fixed even with a force applied to the pin with a finger. Using the same fitting test piece, each of the photocurable coating agents of Examples 1 to 3, Examples 5 to 12, and Comparative Examples 1 to 3 was applied to the inner side of the collar, a pin was fitted, and heat curing was performed in a hot air drying furnace set at 150°C for 30 minutes. After the temperature of the test piece was lowered to room temperature, it was confirmed that the thermosetting property was exhibited because the pin was fixed even with a force applied to the pin with a finger.

The AC resistance value and the DC resistance value were measured for the photocurable coating agents of Examples 1 to 12, Comparative Examples 1 to 3, and Reference Example. The results are listed in Table 2, where G means giga, M means mega, and k means kilo.

### [Measurement of AC resistance value]

On a test piece having a comb-shaped electrode, masking tape with a thickness of 130 µm was attached as a spacer to both left and right sides of the electrode. Thereafter, the composition was dropped, and squeegee was performed with a blade so that the thickness of the composition became 130 µm. UV curing was performed by irradiation with an integrated light amount of 30 kJ/m² using a belt conveyor type ultraviolet irradiator equipped with a high-pressure mercury lamp, and then heat curing was performed using a hot air drying furnace set at 150°C and 30 minutes. The masking tape was peeled off, and electric wires for resistance value measurement were attached to both ends of the comb-shaped electrode with solder. The "AC resistance value (unit: Ω)" at 2 MHz, 1 kHz, and 50 Hz was measured with KEYSIGHT E4980A (manufactured by Keysight Technologies, Inc.)/VHR-S13B (manufactured by TOYO Corporation). It is preferable that the AC resistance value at 2 MHz is 1 MΩ or more, the AC resistance value at 1 kHz is 1 GΩ or more, and the AC resistance value at 50 Hz is 1 GΩ or more.

### [Measurement of DC resistance value]

On a test piece having a comb-shaped electrode, masking tape with a thickness of 130 µm was attached as a spacer to both left and right sides of the electrode. Thereafter, the composition was dropped, and squeegee was performed with a blade so that the thickness of the composition became 130 µm. UV curing was performed by irradiation with an integrated light amount of 30 kJ/m² using a belt conveyor type ultraviolet irradiator equipped with a high-pressure mercury lamp, and then heat curing was performed using a hot air drying furnace set at 150°C and 30 minutes. The masking tape was peeled off, and electric wires for resistance value measurement were attached to both ends of the comb-shaped electrode with solder. "DC resistance value (unit: Ω)" with an applied voltage of 500 V was measured with Agilent 4339B/16008B (manufactured by Agilent Technologies, Inc.). It is preferable that the DC resistance value is 1.0 × 10¹¹ Ω or more.

**[Table 2]**

| Test item | | Example 1 | Example 2 | Example 3 | Example 4 | Example 5 | Example 6 | Example 7 | Example 8 |
|---|---|---|---|---|---|---|---|---|---|
| AC resistance value | 2 MHz | 6.7 M | 6.9 M | 6.2 M | 5.8 M | 5.1 M | 6.5 M | 5.9 M | 3.4 M |
| | 1 kHz | 20.1 G | 20.7 G | 12.6 G | 12.0 G | 10.5 G | 20.2 G | 14.3 G | 17.0 G |
| | 50 Hz | 24.8 G | 27.1 G | 27.3 G | 26.3 G | 26.4 G | 26.1 G | 26.4 G | 26.4 G |
| DC resistance value | | 2.4 × 10¹³ | 2.2 × 10¹³ | 1.3 × 10¹³ | 1.7 × 10¹³ | 1.8 × 10¹³ | 5.6 × 10¹² | 2.0 × 10¹³ | 1.9 × 10¹³ |
| | | | | | | | | | |
| Test item | | Example 9 | Example 10 | Example 11 | Example 12 | Comparative Example 1 | Comparative Example 2 | Comparative Example 3 | Reference Example |
| AC resistance value | 2 MHz | 3.5 M | 3.1 M | 3.3 M | 3.7 M | 17 k | 1.1 k | 1.2 k | 1.8 k |
| | 1 kHz | 18.0 G | 17.7 G | 17.4 G | 20.2 G | 3.3 M | 1.9 k | 2.1 M | 3.4 M |
| | 50 Hz | 26.5 G | 26.8 G | 26.4 G | 26.8 G | 65.3 M | 37.7 M | 41.2 M | 67.0 M |
| DC resistance value | | 6.8 × 10¹¹ | 2.3 × 10¹³ | 4.2 × 10¹² | 15 × 10¹³ | 8.0 × 10¹³ | 2.2 × 10¹¹ | 3.9 × 10¹¹ | 6.0 × 10¹³ |

When the AC resistance values at 2 MHz are compared between Examples 1 to 12 and Comparative Examples 1 to 3, there is a difference between the mega order and the kilo order, and it can be seen that the resistance values of Examples are significantly high and the electrical insulation is good. A similar tendency is observed at other frequencies. In addition, although the DC resistance value can be slightly higher and lower, since the DC resistance value is 1.0 × 10¹¹ Ω or more, sufficient electrical insulation is maintained.

Besides an insulating coating part of a coil such as a motor, the photocurable coating agent of the present invention can be used for an electrical and electronic component requiring high electrical insulation, and is photocurable and thus running cost during use is low. If light does not reach a shadow portion or a gap, thermosetting property or anaerobic curing can be provided, allowing applications for various adherends.

The present application is based on Japanese Patent Application No. 2021-145419 filed on September 7, 2021, the disclosure of which is incorporated herein by reference in its entirety.

## Claims

1. A photocurable coating agent comprising component (A) and component (B), and including component (A-1) in an amount of 50 to 100% by mass with respect to a total of component (A-1) and component (A-2):
Component (A): a (meth)acrylate consisting of following component (A-1) or following component (A-1) and following component (A-2);
Component (A-1): a (meth)acrylate having a cyclic structure;
Component (A-2): a (meth)acrylate having a chain structure and having three or more (meth)acryloyl groups in a molecule; and
Component (B): a photoinitiator.

2. The photocurable coating agent according to claim 1, wherein the component (A-1) is a (meth)acrylate having an alicyclic structure and/or a (meth)acrylate having an isocyanurate structure.

3. The photocurable coating agent according to claim 1 or 2, wherein the photocurable coating agent does not comprise a (meth)acrylate other than the component (A-1) and the component (A-2).

4. The photocurable coating agent according to any one of claims 1 to 3, further comprising an organic peroxide as component (C).

5. The photocurable coating agent according to any one of claims 1 to 4, further comprising an anaerobic curing catalyst as component (D).

6. The photocurable coating agent according to any one of claims 1 to 5, wherein a viscosity at 25°C is 20 to 3000 mPa·s.

7. The photocurable coating agent according to any one of claims 1 to 6, wherein the photocurable coating agent does not comprise a filler.

8. The photocurable coating agent according to any one of claims 1 to 7, wherein the photocurable coating agent does not comprise a solvent.

9. The photocurable coating agent according to any one of claims 1 to 8, wherein an AC resistance value of a cured product at 2 MHz is 1 MΩ or more.
